# EUROPÄISCHE PATENTANMELDUNG

(11) **EP 0 818 336 A2**
(43) Veröffentlichungstag der Anmeldung: **14.01.1998**
(21) Anmeldenummer: 97110687.7
(22) Anmeldetag: 01.07.1997
(51) Int. Cl.: B60H 1/34

(54) **Luftausströmer für die Belüftung insbesondere eines Fahrzeug-Innenraumes**

(30) Priorität: 12.07.1996 DE 19628103
(71) Anmelder: Bayerische Motoren Werke Aktiengesellschaft, 80788 München (DE)
(72) Erfinder: Eder, Karlheinz, 80799 München (DE)

(57) **Zusammenfassung**

Ein Luftausströmer für die Belüftung insbesondere eines Fahrzeug-Innenraumes weist ein trommelförmiges Gehäuse (1) mit einer segmentförmigen Ausströmöffnung (4) auf. Deren freier Austrittsquerschnitt (4') ist durch zwei individuell um die Trommelachse (2) verschwenkbare Schalensegmente (6a,6b) hinsichtlich Lage und Breite veränderbar.

## Beschreibung

Die Erfindung betrifft einen Luftausströmer für die Belüftung insbesondere eines Fahrzeug-Innenraumes mit einem im wesentlichen trommelförmigen Gehäuse und einer segmentförmigen Ausströmöffnung. Lediglich beispielshalber wird zum bekannten Stand der Technik auf die DE-OS 26 48 663 verwiesen, wobei eine Ausströmöffnung von einem um eine Achse verschwenkbaren Schalensegment verschließbar ist. Mit einer Verkleinerung der Ausströmöffnung bzw. des Austrittsquerschnitts derselben geht zwangsläufig eine Bündelung des austretenden Luftstrahles einher, wobei die Austrittsrichtung dieses Luftstrahles nicht weiter verändert werden kann, sondern durch den noch verbleibenden freien Austrittsquerschnitt bzw. durch die aktuelle Position des Schalensegmentes vorgegeben ist.

An einem derartigen Luftausströmer Maßnahmen aufzuzeigen, mit Hilfe derer auf einfache Weise weitere Einstellmöglichkeiten realisiert werden können, ist Aufgabe der vorliegenden Erfindung.

Zur Lösung dieser Aufgabe ist vorgesehen, daß der freie Austrittsquerschnitt der segmentförmigen Ausströmöffnung durch zwei individuell um die Trommelachse verschwenkbare Schalensegmente hinsichtlich Lage und Breite veränderbar ist. Vorteilhafte Aus- und Weiterbildungen sind Inhalt der Unteransprüche.

Erfindungsgemäß sind am und insbesondere innerhalb des trommelförmigen Gehäuses zwei individuell verschwenkbare Schalensegmente vorgesehen, mit Hilfe derer die Ausströmöffnung variiert werden kann. Wird dabei nur eines der Schalensegmente verschwenkt, so wird der freie Austrittsquerschnitt der Ausströmöffnung wie bekannt verringert, wobei die Lage dieses Austrittsquerschnittes wie beim bekannten Stand der Technik unverändert bleibt. Wird zusätzlich das andere Schalensegment verschwenkt, so kann neben der Breite des freien Austrittsquerschnittes auch dessen Lage verändert werden. Dies bedeutet, daß hierbei nicht nur eine Bündelung des Luftstrahles erfolgt, sondern zugleich die Richtung des Luftstrahles verändert werden kann. Es ist also nicht nur möglich, von einer quasi indirekten Anströmung auf eine direkte Anströmung umzuschalten, bei welcher anstelle eines diffusen Luftstromes ein gezielt gerichteter schmaler Luftstrahl aus dem Luftströmer austritt, sondern es kann auch noch die Austrittsrichtung dieses Luftstrahles eingestellt werden.

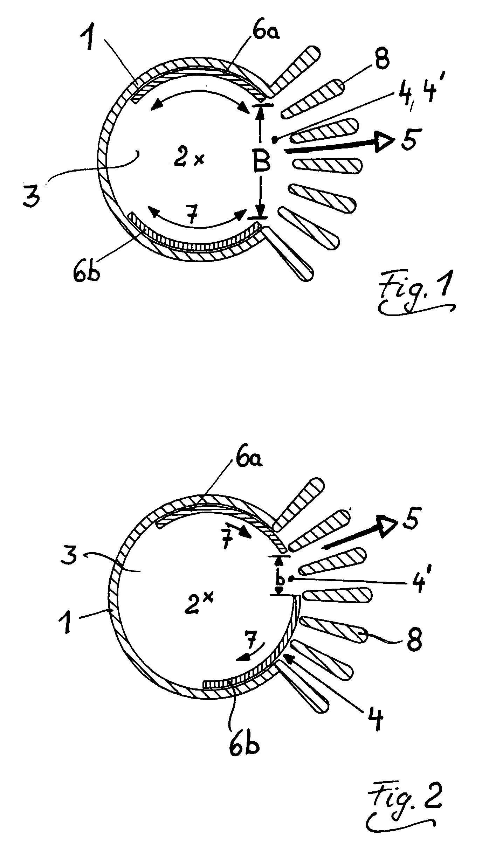

Zwar ist ein derartiger Luftausströmer, bei welchem nicht nur die Breite, sondern auch die Lage eines freien Austrittsquerschnittes veränderbar ist, vom Prinzip her aus der EP 0 368 017 B1 bekannt, jedoch werden bei diesem bekannten Luftausströmer Kanalbegrenzungswände individuell verschwenkt, was unter konstruktiven Gesichtspunkten relativ aufwendig ist. Hinsichtlich seines Aufbaus deutlich einfacher ist demgegenüber ein erfindungsgemäßer Luftausströmer, wie auch aus der folgenden Beschreibung eines bevorzugten Ausführungsbeispieles hervorgeht. Dabei ist in den Fig. 1, 2 ein derartiger Luftausströmer in zwei verschiedenen Einstellungen gezeigt. Der lediglich prinzipiell dargestellte Luftausströmer besitzt ein im wesentlichen trommelförmiges Gehäuse 1, dessen Trommelachse 2 sich senkrecht zur Zeichenebene erstreckt. Ein beispielsweise über die hintere Stirnseite 3 des Gehäuses 1 in den Innenraum des Gehäuses 1 zugeführter Luftstrom kann über eine Ausströmöffnung 4 gemäß Pfeilrichtung 5 wieder austreten, wobei dieser Luftausströmer beispielsweise in der Armaturentafel eines Personenkraftwagens angeordnet sein kann, so daß der gemäß Pfeilrichtung 5 austretende Luftstrom beispielsweise zum Fahrer des Fahrzeuges hin gerichtet ist.

Innerhalb des Gehäuses 1 sind zwei Schalensegmente 6a, 6b vorgesehen, die sich in Richtung der Trommelachse 2 zumindest über die Länge der Ausströmöffnung 4 erstrecken und die um diese Trommelachse 2 gemäß Pfeilrichtung 7 verschwenkbar sind. Diese Schalensegmente 6a, 6b liegen dabei im wesentlichen an der Innenwand des Gehäuses 1 an, besitzen daher die gleiche Krümmung und stellen somit Segmente eines Kreisbogens um die Trommelachse 2 dar.

Bei der Darstellung nach Fig. 1 sind die beiden Schalensegmente 6a, 6b derart positioniert, daß die Ausströmöffnung 4 vollständig geöffnet ist. Der freie Austrittsquerschnitt 4', über den quasi diffuser Luftstrom gemäß Pfeilrichtung 5 austreten kann, ist dabei identisch der Ausströmöffnung 4.
Bei der Darstellung nach Fig. 2 wurden die beiden Schalensegmente 6a, 6b derart verschwenkt, daß sich ein gegenüber der Darstellung nach Fig. 1 deutlich geringerer freier Austrittsquerschnitt 4' ergibt. Hier tritt nun gemäß Pfeilrichtung 5 ein deutlich gebündelter Luftstrahl aus. Bei der in Fig. 2 gezeigten Position der Schalensegmente 6a, 6b weist diese Austrittsrichtung 5 zumindest teilweise nach oben. Durch entsprechende Positionierung der beiden Schalensegmente 6a, 6b ist es jedoch auch möglich, den gleichen freien Austrittsquerschnitt 4' derart zu positionieren, daß die Austrittsrichtung teilweise nach unten weist. Hierzu ist es lediglich erforderlich, die beiden Schalensegmente 6a, 6b jeweils um den gleichen Betrag gemäß Pfeilrichtung 7 zu verschwenken.
Indem somit die beiden Schalensegmente 6a, 6b individuell verschwenkt werden können, ist es nicht nur möglich, die Breite b des freien Austrittsquerschnittes 4' nahezu beliebig einzustellen (nämlich vom Wert 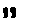 0" bis hin zur Breite B der Ausströmöffnung 4), sondern darüber hinaus kann auch die Lage des freien Austrittsquerschnittes 4' bezüglich der Ausströmöffnung 4 eingestellt werden. In anderen Worten ausgedrückt ist es somit möglich, mittels der individuell einstellbaren Schalensegmente 6a, 6b die Ausströmöffnung 4 stufenlos von unten und/oder von oben her zu verschließen. Mit diesem Ausströmer kann somit stufenlos von einer breitgefächerten diffusen bis zu einer gebündelten Ausströmung umgestellt werden, wobei die Ausblasrichtung bei gebündelter Ausströmung variiert werden kann.

An der Ausströmöffnung 4 sind sich in Richtung der Trommelachse 2 erstreckende und von dieser Trommelachse 2 nach außen weggerichtete unbewegliche Luftleit-Lamellen 8 vorgesehen. Diese Lamellen 8 dienen zur gezielten Auffächerung des gemäß Pfeilrichtung 5 austretenden Luftstromes, wobei ab einer gewissen Mindestlänge diese Lamellen 3 beliebig verlängert werden können, so daß hiermit eine Ausströmoberfläche beliebiger Kontur erzeugt werden kann. Vorteilhafterweise bleibt auch aufgrund dieser Luftleit-Lamellen die Optik des beschriebenen Ausströmers bei einer Verstellung der Schalensegmente 6a, 6b unverändert. Da diese Lamellen 8 unbeweglich sind, können sie aus nahezu beliebigen Materialien hergestellt werden, z. B. auch aus einem elastischen Material zur Erfüllung von Sicherheitsvorschriften. Jedoch kann dies sowie eine Vielzahl weiterer Details durchaus abweichend vom gezeigten Ausführungsbeispiel gestaltet sein, ohne den Inhalt der Patentansprüche zu verlassen. So ist es zum Beispiel möglich, vor den horizontalen Luftleit-Lamellen 8 noch beweglliche vertikale Luftleit-Lamellen vorzusehen, die eine seitliche Verstellung der Luftausströmrichtung ermöglichen.

## Patentansprüche

1. Luftausströmer für die Belüftung insbesondere eines Fahrzeug-Innenraumes mit einem im wesentlichen trommelförmigen Gehäuse (1) und einer segmentförmigen Ausströmöffnung (4), deren freier Austrittsquerschnitt (4') durch zwei individuell um die Trommelachse (2) verschwenkbare Schalensegmente (6a, 6b) hinsichtlich Lage und Breite (b) veränderbar ist.

2. Luftausströmer nach Anspruch 1,
dadurch gekennzeichnet, daß die Schalensegmente (6a, 6b) an der Innenwand des Gehäuses (1) im wesentlichen anliegend vorgesehen sind.

3. Luftausströmer nach Anspruch 1 oder 2,
dadurch gekennzeichnet, daß an der Ausströmöffnung (4) sich in Trommelachsrichtung erstreckende und von der Trommelachse (2) nach außen weggerichtete, unbewegliche Luftleit-Lamellen (8) vorgesehen sind.

4. Luftausströmer nach Anspruch 3,
dadurch gekennzeichnet, daß die Luftleit-Lamellen (8) in einem elastischen Material ausgeführt sind.
